Europäisches Patentamt

(19) European Patent Office

Office européen des brevets

(11) Publication number: **0 232 239**
**A2**

# (12) EUROPEAN PATENT APPLICATION

(21) Application number: 87850040.4

(22) Date of filing: 05.02.87

(51) Int. Cl.³: **A 41 D 19/00**
**A 41 D 19/04, B 29 D 31/00**

(30) Priority: 07.02.86 NO 860428

(43) Date of publication of application:
**12.08.87 Bulletin 87/33**

(84) Designated Contracting States:
**BE DE GB SE**

(71) Applicant: NORSK HYDRO A/S
Bygdoy Allé 2
N-0257 Oslo 2(NO)

(72) Inventor: Härdin, Hans-Erik
Appelbergsvägen 26
S-862 59 Sundsvall(SE)

(74) Representative: Halldin, Bo et al,
Dr. Ludwig Brann Patentbyra AB Kungsgatan 3 P.O. Box 7524
S-103 92 Stockholm(SE)

(54) Disposable glove and process for production of the same.

(57) Disposable glove of synthetic material, more especially softened polyvinyl chloride, which is treated with a powdery material which can be bonded with the glove surface and thereby forms minute nodules in this. In accordance with the procedure this is done by preheated forms of china or metal being dipped in plastisol and thereafter pregelatinized. The forms with the pregelatinized glove coating are thereafter treated in a fluidized bed or are sprayed with a powdery material having a particle size of between 50-500 microns. The coated forms are then heated until the coating gelantinizes and the applied material adheres to it. When, after cooling, the glove coating is rolled off the forms, the inside of the glove will have a great number of minute nodules, which will prevent it from sticking to itself, and which also makes the glove easier to pull on and off, since the minute nodules allow air to enter between the glove and the hand.

EP 0 232 239 A2

Croydon Printing Company Ltd.

1

The present invention concerns a disposable glove of synthetic material, more especially to softened polyvinyl chloride and the production process for same.

Disposable gloves of the above type have been manufactured for some time. It is known that such gloves may be manufactured by dip moulding in rubber latex, whereby a layer of latex is left on the form. The latex is thereafter coagulated by heating. A transparent film of unvulcanized rubber is thus formed on the surface of the form. The rubber film is then dusted with talcum, cornflour or some other suitable dusting powder before it is rolled off the mould as a disposable glove.

Vulcanization and heat stabilizing agents can also be added to the latex so that the coagulated rubber film can be vulcanized. Gloves made by this method will be more resistant than unvulcanized gloves.

Disposable gloves can also be made from other materials, such as softened polyvinyl chloride. The procedure for manufacturing such gloves is the same as that for vulcanized rubber gloves, except that the forms are not dipped in rubber latex but in a plastisol.

Disposable gloves made by the above methods all have the disadvantage that they have a sticky surface which makes it impossible to remove the glove from the form. This stickiness can, however, be avoided by simple means such as by allowing the forms with the transparent glove film to pass through a chamber where the air current is charged with finely divided cornflour, talcum or a similar dusting powder. Thereby a thin layer of powder is left on the glove. When the glove is rolled off the form, the powdered surface will then be the inside of the glove. The powdering makes the surface of the glove dry so that it may be rolled off the form without sticking to itself, and later on makes it easier for the user to pull onto his hand.

However, these powders have a definite disadvantage in that bad odour can often arise from bacteria activity in the organic powder. The smell resulting from the combination of hand perspiration and cornflour is not a pleasant one. Moreover, it is objectionable to use such gloves for surgical operations and for work in the electronic industry as it is inevitable that some powder will fall out of the glove when it is in use.

It is thus the object of the present invention to produce a disposable glove where the above disadvantages are avoided and where, at the same time, the advantage of powdering is retained.

It has now been found that the above disadvantages can be avoided if the inside surface of the glove is covered by minute nodules so that air can enter when the glove film is rolled off the form. Adhesion between the outer and inner layers of the glove is thereby prevented.

Furthermore, the minute nodules adhere to the inside of the glove, so that when the glove is put on, there will be no powder to fall out onto the work being carried out. Another advantage is that there is better ventilation in the glove when air is freely admitted between the glove and the hand. This reduces the formation of perspiration inside the glove, making it feel drier and more pleasant to use.

For better understanding of the invention reference is made to the following description of the procedure for the manufacture of the disposable glove concerned.

Previously heated forms of a ceramic material (china) or metal are dipped into a bath of plastisol either by hand or mechanically.

The forms may be affixed to a conveyor so that when the forms are to be dipped in the plastisol, they are automatically dipped into the plastisol and then lifted out again so that the surplus plastisol can drip off.

If the dipping is to be carried out manually, then the forms have to be removed from the conveyor one by one for dipping, whereafter they are hung up on the conveyor again for the surplus plastisol to drip off.

The layer that is thus deposited on the preheated forms is heated rapidly to a high temperature for pregelatinization of the plastisol film.

However, the outer surface is still so soft that by dipping the forms into a fluidized bed with, say, PVC-powder, by sprinkling of the forms with PVC powder or by electrostatic application of the PVC-powder, the PVC-powder will adhere to the outer, thickened plastisol film in such a way that the PVC-particles form minute nodules in the surface.

The forms with coating are thereafter placed in a gelatinization oven where the temperature is kept at between 180-400°C so that the plastisol coating is gelantinized and becomes transparent.

The PVC-powder that has penetrated the pregelatinized surface will thus melt into the film during the gelatinization

4

process, whilst the PVC-powder left on the surface will
remain unmelted and emerge as minute nodules in the surface.
In order that the PVC-powder shall not melt with the surface
underneath, its characteristics must be adjusted for the
conditions concerned. The PVC-powder should thus have a
higher melting temperature than that of the surface. The most
suitable for this purpose is therefore suspension polyvinyl
chloride in unsoftened or slightly softened state and with a
k-value of about 70. The particle size should preferably be
between 100-300 microns, but may be larger or smaller than
this.

The glove film is then cooled by cold air or by other means
of cooling, whereafter it is rolled off the form either
manually or mechanically.

Example 1

The above types of forms are preheated to 80-100$^o$ C before
they are dipped in a bath of plastisol, where the plastisol
has the following composition:

| | | |
|---|---|---|
| Paste PVC (E-PVC) | 100 | parts |
| Diisodecylphtalate | 90 | " |
| Texanolisobutyrate x) | 30 | " |
| Epoxidized soy bean oil | 3 | " |
| Ca-Zn stabilizer | 3 | " |

The plastisol bath should have ordinary room temperature.

The forms are thereafter lifted out of the plastisol bath and
left to hang for a while in room temperature so that the
surplus plastisol may drip off.

x) 2,2,4 - trimethyl - 1.3 - pentandioldiisobutyrate.

The forms are then placed in a pregelatinization oven at a temperature of approx. $200^{o}$ C for 20-60 secs. so that the plastisol coating thickens or is pregelatinized.

After cooling to $50-70^{o}C$, the forms with the pregelatinized coating are dipped in a fluidized bed for sprinkling with a suitable powder that can adhere to the surface. In this particular invention it has been found that suspension PVC powder (S-PVC) with a k-value of about 70 is the most suitable, but excellent results have also been obtained with other types of plastic powder such as finely ground acrylic powder.

The main condition seems to be that the powder used has affinity to the coating on the forms, i.e. that an homogenous bonding takes place during the subsequent gelatinization of the coating on the form .

Another condition is that if the dipping is done in a fluidized bed, the powder must be fluidizable.

The forms with powder-coated coating are then placed in a gelatinisation zone at $180-400^{o}C$ where the coating is gelatinized and becomes transparent and where the applied powder hardens.

The forms are then cooled to approx. $50^{o}C$, whereafter the disposable gloves can be rolled off the forms.

## Example 2

The same procedure as in Example 1 is followed, but the plastisol compound has the following composition:

| | | |
|---|---|---|
| Paste PVC (E-PVC) | 75 | parts |
| Suspension PVC (S-PVC) | 25 | " |
| Diisodecylphtalate | 100 | " |
| Epoxidized soy bean oil | 3 | " |
| Ca-Zn stabilizer | 3 | " |

A fluidized bed with polymethylmethacrylate powder (particle size: 150-300 microns) instead of suspension PVC (S-PVC).

For the above procedure, where a synthetic powder that will adhere to the coating is applied to the coating on the surface of the form, the invention has made it possible to manufacture a disposable glove that is easy to roll off the forms and which is also easy to pull on and off the hand. Another advantage that has been attained by this invention is that because the inside surface of the glove is covered with minute nodules, there is no loose powder to fall out.

## Claims

1. Disposable glove of synthetic material, more especially softened polyvinyl chloride, c h a r a c t e r i z e d   i n   t h a t the inside surface of the glove is covered by a great number of minute nodules formed by a powdery material which during the manufacturing process is bonded to the main material of the glove.

2. Disposable glove according to claim 1, c h a r a c t e r i z e d   i n   t h a t the powdery material which forms minute nodules inside the glove has a particle size of between 50-500 microns, preferably between 100-300 microns.

3. Disposable glove according to claim 1, c h a r a c t e r i z e d   i n   t h a t the powdery material is a plastic, preferably such that can bond with the glove material by melting with this.

4. Powdery material according to claim 3, c h a r a c t e r i z e d   i n   t h a t the material should preferably consist of a homo- and/or copolymer polyvinyl chloride in pure or softened state and/or an acrylic polymer.

5. The procedure for the manufacture of disposable gloves of a plastic material according to claims 1-4, c h a r a c t e r i z e d   i n   t h a t a powdery material is applied to the glove surface on the forms and through heating and gelatinization of the glove surface adheres to this and thereby forms a large number of minute nodules on the inside of the disposable glove when, in a subsequent process, the gloves are rolled off the forms.

6.    The procedure for manufacturing disposable gloves according to claims 1-5,
c h a r a c t e r i z e d   i n   t h a t
the powdery material is applied to the coating on the forms by dipping in a fluidized bed, or is applied to the coating by means of powder spraying or is applied to the coating by means of electrostatic application.